# EUROPÄISCHE PATENTSCHRIFT

(11) **EP 0 578 117 B1**
(45) Veröffentlichungstag und Bekanntmachung des Hinweises auf die Patenterteilung: **04.09.1996**
(21) Anmeldenummer: 93110416.0
(22) Anmeldetag: 30.06.1993
(51) Int. Cl.: G21C 17/01

(54) **Vorrichtung zur Inspektion des Innenraumes eines Druckbehälters.**
Apparatus for the inspection of the interior of a pressure vessel.
Dispositif d'inspection de la surface intérieure d'une enceinte sous pression.

(30) Priorität: 04.07.1992 DE 4222066
(43) Veröffentlichungstag der Anmeldung: 12.01.1994
(73) Patentinhaber: ABB Reaktor GmbH, D-68167 Mannheim (DE)
(72) Erfinder: Dietrich, Alban, D-6733 Hassloch (DE)
(74) Vertreter: Rupprecht, Klaus, Dipl.-Ing.

(56) Entgegenhaltungen:
- EP-A- 0 017 551
- DE-A- 4 104 566
- FR-A- 1 392 779
- FR-A- 2 564 362
- US-A- 4 561 816
- PROCEEDINGS OF A TECHNICAL COMMITTEE ON ROBOTICS AND REMOTE MAINTENANCE CONCEPTS FOR FUSION MACHINES, KARLSRUHE, 22-2-1988, Seiten 129 - 140, SELIG ET AL.: 'The TFTR Maintenance Manipulator'

## Beschreibung

Die Erfindung betrifft eine Einrichtung zur Inspektion eines mit einer Öffnung versehenen Druckbehälters, mit einem entlang einer die Öffnung durchsetzenden Führungsrutsche in den Innenraum bewegbaren Manipulator, der an einem in den Behälter ragenden Ende eines von außerhalb des Druckbehälters aus angetriebenen Transportmittels aufgehängt ist, wobei der Manipulator einen verdrehbaren Inspektionskopf aufweist und wobei dem Manipulator in radialer Richtung gegenläufig schwenkbare Arme zugeordnet sind.

Eine derartige Einrichtung ist aus der EP-A-0 017 551 bekannt.

Dort wird als Transportmittel ein flexibles Rohr verwendet, das von außerhalb des Druckbehälters aus um seine Achse drehbar ist und dadurch die Verdrehbewegung des Inspektionskopfes bewirkt. Mit der fernbetätigten Verdrehbewegung wird offenbar eine Auslenkbewegung des Inspektionskopfes erzeugt, so daß die vom Manipulator auskragenden Arme unter Zwischenschaltung von Rollen eine gegenüber der Druckbehälterinnenwand zentrierende Abstützung bewirken. Die Führungsrutsche besteht aus einem starren mit einer Biegung versehenen rohrförmigen Körper, dessen Biegung eine Führung des Transportmittels nur in einer bestimmten Abknickung erlaubt.

Es stellt sich die Aufgabe, eine Einrichtung der eingangsgenannten Art anzugeben, die den Inspektionskopf näher an die Innenwand des Druckbehälters heranbringt, trotzdem eine Pendelbewegung verhindert und den Einlaufwinkel des Transportmittels an die Gegebenheiten des Druckbehälters flexibel anpaßt.

Gelöst wird die Aufgabe erfindungsgemäß dadurch, daß das Transportmittel eine torsionssteife Transportkette ist, mit der der Manipulator um die Transportkettenlängsachse drehbar verbunden ist, daß der in den Innenraum ragende Teil der Führungsrutsche aus mehreren Segmenten besteht, die über Gelenkbolzen miteinander verbunden sind und bogenförmige Schlitze zur Bestimmung eines Verstellweges aufweisen, daß an dem freien Ende eines Armes der Inspektionskopf in radialer Richtung schwenkbar angeordnet ist und daß dem anderen Arm zur Kompensierung von Momenten beim Ausschwenken der Arme Ausgleichsgewichte zugeordnet sind.

Damit wird eine Einrichtung geschaffen, die auf Grund der variablen Führungsrutsche universeller einsetzbar ist und insbesondere wegen des näher an die Wand gerückten Inspektionskopfes bessere Inspektionsergebnisse bringt. Die Verwendung von Ausgleichsgewichten macht eine Abstützung des Manipulators gegenüber der Innenwand überflüssig..

Gemäß einer bevorzugten Ausgestaltung ist vorgesehen, daß an den freien Enden der Arme ein Gestänge angreift, dessen Bewegung über ein in Achsverlängerung der Transportkette angeordnetes Betätigungselement gesteuert ist, wobei zwischen dem Gestänge und dem Inspektionskopf ein Steuerorgang zur Schwenkbewegung des Inspektionskopfes angeordnet ist.

Eine andere Ausführung zur Vermeidung einer Pendelbewegung sieht vor, daß in einem der Unterbringung von Versorgungsleitungen dienenden Freiraum der Transportkette ein luftgefüllter Schlauch angeordnet ist.

Anhand eines Ausführungsbeispieles und einer schematischen Zeichnung wird die erfindungsgemäße Einrichtung beschrieben.

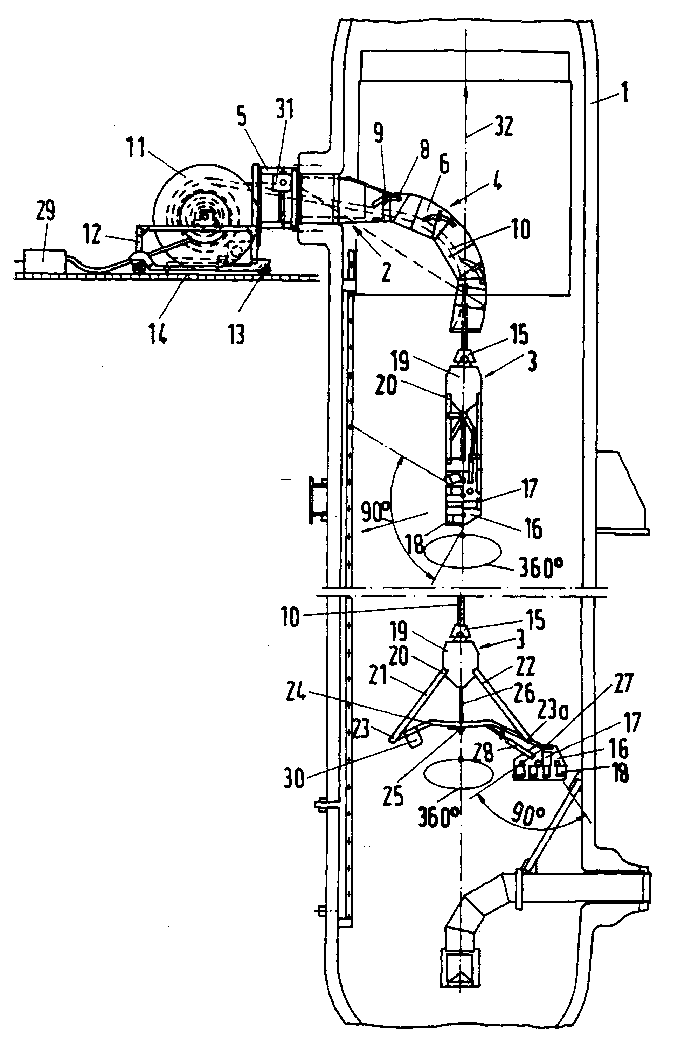

Die Zeichnung zeigt als Druckbehälter 1 einen Druckbehälter einer nicht weiter dargestellten Druckwasserreaktoranlage. Der unterhalb eines Mannloches 2 befindliche Innenbereich ist mit Hilfe eines Manipulators 3 zu inspizieren. Dazu ist eine in ihrem Querschnitt U-förmig ausgebildete Führungsrutsche 4 vorgesehen, die mit ihrem das Mannloch durchsetzenden Ende an einer Flanschbuchse 5 befestigt ist, die ihrerseits relativ zum Mannloch festlegbar ist. Der in den Innenraum des Druckbehälters ragende Teil der Führungsrutsche weist drei bogenförmige Segmente 6 auf, die über Gelenkbolzen 7 untereinander bzw. mit dem im Mannloch arretierten Teil der Führungsrutsche schwenkbar verbunden sind. Der Schwenkweg des einzelnen Segmentes ist durch bogenförmige Schlitze 8, die mit Anschlägen 9 zusammenarbeiten, bestimmt. Beim Ein- oder Ausbringen der Führungsrutsche sind die Segemente 6 beispielsweise durch nicht dargestellte Seilzüge nacheinander von der bogenförmigen in eine waagrechte Erstreckung oder umgekehrt zu bringen.

Die Führungsrutsche 4 dient zur Führung einer Transportkette 10, die mit Hilfe einer Trommel 11 bewegbar ist. Ein mit der Flanschbuchse 5 verbundenes Traggestell 12 zur Aufnahme der Trommel ist über Rollen 13 entlang eines Tragbodens 14 verfahrbar. Die Transportkette 10 trägt unter Zwischenschaltung eines Drehantriebes 15 den Manipulator 3. Das dem Drehantrieb 15 zugewandte Segement der Führungsrutsche 4 ist dabei so eingestellt, daß bei pendelfreier Bewegung die Achse 32 des Druckbehälters 1 mit der symmetrischen Längsachse der Transportkette übereinstimmt.

Zum Ein- und Ausbringen wird der Manipulator 3 in die aus der oberen Zeichnungshälfte ersichtliche Kompaktform gebracht, aus der er in die schirmförmige Ausbildung nach der unteren Zeichnungshälfte verfahren werden kann. In der Kompaktform weist der Manipulator einen U-förmigen Querschnitt auf, der eine Bewegung entlang der Führungsflächen der U-förmigen Führungsrutsche mit geringem Spiel erlaubt. Bei der Kompaktform weist ein Inspektionskopf 16, der bei dem Ausführungsbeispiel mit einer Kamera 17 und mit mehreren Beleuchtungskörpern 18 ausgestattet ist, eine solche Position auf, daß er einen großen Bereich der Druckbehälterwandung zusammen mit einer Vertikal- und/oder Drehbewegung um 360° bestreichen kann. Für weniger gut erreichbare Bereiche des Druckbehälterinnenraumes wird der Manipulator 3, wie aus der unteren Zeichnungshälfte ersichtlich, schirmartig auseinander gefahren. Der Inspektionskopf kann somit alle Positionen zwischen der senkrechten Erstreckung nach der Kompaktform bis zur waagrechten Erstreckung gemäß der unteren Zeichnungshäfte einnehmen. Dazu sind einem Manipulatorkörper 19 über Drehgelenke 20 zwei gegenüberliegend angeordnete Arme 21, 22 zugeordnet. Das dem Manipulatorkörper 19 abgewandte Ende eines jeden Armes 21, 22 ist über ein weiteres Drehgelenk 23, 23a mit einem Gestänge 24 verbunden, in dessen zentralem Drehpunkt 25 eine in Achsrichtung des Manipulators 3 vom Manipulatorkörper 19 wegführende Gewindespindel 26 eingreift und die Verstellbewegung der Arme 21, 22 bewirkt. Ein Ende des Gestänges 24 ist über das Drehgelenk 23a des Armes 22 hinausgeführt und ist über ein Drehgelenk 27 mit dem Inspektionskopf verbunden. Das Gestänge 25 und der Inspektionskopf sind ferner über einen Spindeltrieb 28 miteinander verbunden, wodurch eine Feinverstellung des Inspektionskopfes ermöglicht wird.

Die Transportkette nimmt die Versorgungsleitungen für den Manipulator und den Inspektionskopf auf, die von einem Verteilerkasten 29 zu einer nicht dargestellten Auswertestation der Inspektionsergebnisse führen. Zur Vermeidung von Pendelbewegungen des Manipulators sind am Gestänge 24 Ausgleichsgewichte 30 anbringbar. Ein nicht dargestellter luftgefüllter Schlauch, der in einem der Unterbringung von Versorgungsleitungen dienenden Freiraum der Transportkette angeordnet ist, wirkt ebenfalls dem Aufkommen von Pendelbewegungen entgegen. Ein von der Transportkette zwangsläufig bewegtes Zählrad 31 dient zur Überwachung der Manipulatorposition.

## Patentansprüche

1. Einrichtung zur Inspektion des Innenraumes eines mit einer Öffnung (2) versehenen Druckbehälters (1), mit einem entlang einer die Öffnung durchsetzenden Führungsrutsche (4) in den Innenraum bewegbaren Manipulator (3), der an einem in den Behälter ragenden Ende eines von außerhalb des Druckbehälters aus angetriebenen Transportmittels aufgehängt ist, wobei der Manipulator einen verdrehbaren Inspektionskopf aufweist und wobei dem Manipulator in radialer Richtung gegenläufig schwenkbare Arme (21, 22) zugeordnet sind, dadurch gekennzeichnet, daß das Transportmittel eine torsionssteife Transportkette (10) ist, mit der der Manipulator um die Transportkettenlängsachse drehbar verbunden ist, daß der in den Innenraum ragende Teil der Führungsrutsche (4) aus mehreren Segmenten (6) besteht, die über Gelenkbolzen miteinander verbunden sind und bogenförmige Schlitze (8) zur Bestimmung eines Verstellweges aufweisen, daß an dem freien Ende eines Armes (22) der Inspektionskopf (16) in radialer Richtung schwenkbar angeordnet ist und daß dem anderen Arm (21) zur Kompensierung von Momenten beim Ausschwenken der Arme Ausgleichsgewichte (30) zugeordnet sind.

2. Einrichtung nach Anspruch 1, dadurch gekennzeichnet, daß an den freien Enden der Arme (21, 22) ein Gestänge (24) angreift, dessen Bewegung über ein in Achsverlängerung der Transportkette (10) angeordnetes Betätigungselement (26) gesteuert ist, wobei zwischen dem Gestänge (24) und dem Inspektionskopf (16) ein Steuerorgan (28) zur Schwenkbewegung des Inspektionskopfes angeordnet ist.

3. Einrichtung nach Anspruch 1 oder 2, dadurch gekennzeichnet, daß in einem der Unterbringung von Versorgungsleitungen dienenden Freiraum der Transportkette (10) ein luftgefüllter Schlauch zur Unterdrückung von Auslenkbewegungen der Transportkette (10) angeordnet ist.

## Claims

1. Device for inspecting the interior of a pressure vessel (1) provided with an opening (2), having a manipulator (3) which can be moved into the interior along a guide chute (4), passing through the opening, and is suspended on one end, protruding into the vessel, of a means of transport which is driven from outside the pressure vessel, the manipulator having a rotatable inspection head, and the manipulator being assigned arms (21, 22) which can be pivoted radially in opposite directions, characterized in that the means of transport is a transport chain (10) which is stiff against torsion and to which the manipulator is connected so as to be rotatable about the longitudinal axis of the transport chain, in that the part of the guide chute (4) which protrudes into the interior comprises a plurality of segments (6) which are connected to one another by means of hinge pins and have arcuate slots (8) in order to define an adjustment path, in that the inspection head (16) is arranged at the free end of one arm (22) so as to be radially pivotable, and in that counterbalancing weights (30) are assigned to the other arm (21) in order to compensate moments during the pivoting-out operation.

2. Device according to Claim I, characterized in that a linkage (24) engages at the free ends of the arms (21, 22) and its movement is controlled by means of an actuating element (26) arranged in the axial extension of the transport chain (10), a control element (28) for the pivoting movement of the inspection head being arranged between the linkage (24) and the inspection head (16).

3. Device according to Claim 1 or 2, characterized in that an air-filled hose for suppressing deflection movements of the transport chain (10) is arranged in a free space in the transport chain (10) which serves to accommodate power supply lines.

## Revendications

1. Dispositif pour l'inspection de l'intérieur d'une cuve sous pression (1) pourvue d'une ouverture (2), comportant un manipulateur (3) qui peut être déplacé à l'intérieur de la cuve, le long d'une glissière de guidage (4) passant par l'ouverture, et est suspendu à l'extrémité pénétrant dans la cuve d'un moyen de transport mû depuis l'extérieur de la cuve sous pression, le manipulateur étant pourvu d'une tête d'inspection mobile en rotation et des bras (21, 22) qui peuvent pivoter en sens opposé dans la direction radiale étant associés au manipulateur, caractérisé par le fait que le moyen de transport est une chaîne de transport (10) rigide en torsion à laquelle le manipulateur est relié avec possibilité de rotation autour de l'axe longitudinal de ladite chaîne de transport, par le fait que le tronçon de la glissière de guidage (4) faisant saillie à l'intérieur de la cuve est formé de plusieurs segments (6) qui sont reliés les uns aux autres par l'intermédiaire d'axes d'articulation et présentent des lumières (8) en arc de cercle pour déterminer la course de déplacement, par le fait que la tête d'inspection (16) est disposeé à l'extrémité libre de l'un des bras (21), avec possibilité de pivotement dans la direction radiale et par le fait que des contrepoids (30) sont associés à l'autre bras (21) afin de compenser les moments lors du déploiement des bras.

2. Dispositif selon la revendication 1, caractérisé par le fait qu'une tringlerie (24), dont le déplacement est commandé par un élément d'actionnement (26) disposé dans le prolongement axial de la chaîne de transport (10), agit sur les extrémités libres des bras (21, 22), un organe de commande (28) pour le pivotement de la tête d'inspection (16) étant disposé entre la tringlerie (24) et ladite tête d'inspection (16).

3. Dispositif selon la revendication 1 ou 2, caractérisé par le fait qu'un tuyau souple rempli d'air destiné à amortir les mouvement de balancement de la chaîne de transport (10) est disposé dans un espace de la chaîne de transport servant au logement de conduites d'alimentation.
